# EUROPEAN PATENT SPECIFICATION

(11) **EP 3 910 837 B1**
(45) Date of publication and mention of the grant of the patent: **17.09.2025**
(21) Application number: 19908430.2
(22) Date of filing: 08.01.2019
(51) Int. Cl.: H04L 1/1812, H04L 1/1822, H04L 1/1867, H04W 72/1273, H04L 1/06

(54) **DOWNLINK DATA SENDING METHOD, RECEIVING METHOD, DEVICE, AND STORAGE MEDIUM**
DOWNLINK-DATENSENDEVERFAHREN, EMPFANGSVERFAHREN, VORRICHTUNG UND SPEICHERMEDIUM
PROCÉDÉ D'ENVOI DE DONNÉES DE LIAISON DESCENDANTE, PROCÉDÉ DE RÉCEPTION, DISPOSITIF ET SUPPORT D'INFORMATIONS

(43) Date of publication of application: 17.11.2021
(73) Proprietor: Beijing Xiaomi Mobile Software Co., Ltd., Beijing 100085 (CN)
(72) Inventor: LI, Mingju, Beijing 100085 (CN)
(74) Representative: Gunzelmann, Rainer
(86) International application number: PCT/CN2019/070906
(87) International publication number: WO 2020/142911

(56) References cited:
- CN-A- 105 474 569
- CN-A- 107 896 121
- CN-A- 107 896 121
- CN-A- 108 023 687
- US-A1- 2017 366 311
- HUAWEI ET AL: "DL multi-TRP/panel operation in R15", vol. RAN WG1, no. Athens, Greece; 20180226 - 20180302, 16 February 2018 (2018-02-16), pages 1 - 3, XP051397457, Retrieved from the Internet <URL:http://www.3gpp.org/ftp/tsg%5Fran/WG1%5FRL1/TSGR1%5F92/Docs/> [retrieved on 20180216]
- SPREADTRUM COMMUNICATIONS: "Discussion on Multi-TRP transmission", vol. RAN WG1, no. Spokane, USA; 20181112 - 20181116, 2 November 2018 (2018-11-02), XP051479334, Retrieved from the Internet <URL:http://www.3gpp.org/ftp/tsg%5Fran/WG1%5FRL1/TSGR1%5F95/Docs/R1%2D1813066%2Ezip> [retrieved on 20181102]

## Description

### TECHNICAL FIELD

The present disclosure relates to a field of communication technology, and more particularly, to a method and an apparatus for sending downlink data, a method and an apparatus for receiving downlink data and a storage medium.

### BACKGROUND

In a 5G NR (New Radio) system, a base station and a terminal may send and receive information using beams. For example, a control signaling and business data exchanged between the base station and the terminal may be received or sent using the beams.

Given that the base station has multiple antenna panels, the base station may send downlink data to the terminal through different antenna panels or through different beams. In this case, how to handle an HARQ (Hybrid Automatic Repeat reQuest) process of the multiple antenna panels is a problem addressed by the instant disclosure.

Document HUAWEI ET AL: "DL multi-TRP/panel operation in R15", 3GPP DRAFT; R1-1802073, 3RD GENERATION PARTNERSHIP PROJECT (3GPP), MOBILE COMPETENCE CENTRE ; 650, ROUTE DES LUCIOLES; F-06921 SOPHIA-ANTIPOLIS CEDEX ; FRANCE, vol. RAN WG1, no. Athens, Greece; 20180226, provides views on the essential features of multi-TRP/panel transmissions in the case of multiple NR-PDCCH reception and multi-TRP/panel transmissions with single-PDCCH.

### SUMMARY

The present disclosure provides a method, according to claim 1, and an apparatus, according to claim 4, for sending downlink data, a method, according to claim 3, and an apparatus, according to claim 5, for receiving downlink data, and a storage medium, according to claim 6. The technical solutions will be described as follows.

The technical solutions according to embodiments of the present disclosure may include the following beneficial effects.

By including the HARQ process number corresponding to the downlink data sent through each antenna panel in the downlink schedule information sent by the base station to the terminal that is used to schedule the plurality of antenna panels of the base station for sending the downlink data to the terminal, an HARQ process scheme is provided for the plurality of antenna panels, such that the HARQ process numbers corresponding to the downlink data sent by the plurality of antenna panels may be used by the terminal for distinguishing, first-time transmitted data corresponding to certain re-transmitted data may be known accurately, and the re-transmitted data and the first-time transmitted data may be received and decoded jointly, thus improving throughput capacity.

It should be understood that the above general description and the following details are explanatory and illustrative, and shall not be construed to limit the present disclosure.

### BRIEF DESCRIPTION OF THE DRAWINGS

The accompanying drawings are incorporated into the disclosure as one part therein to illustrate embodiments of the present disclosure. The accompanying drawings together with the specification explain the principle of the present disclosure.
FIG. 1 is a schematic diagram illustrating a network structure according to an example embodiment.
FIG. 2 is a flowchart illustrating a method for sending downlink data according to an example embodiment.
FIG. 3 is a block diagram illustrating an apparatus for sending downlink data according to an example embodiment.
FIG. 4 is a block diagram illustrating an apparatus for receiving downlink data according to an example embodiment.
FIG. 5 is a block diagram illustrating a terminal according to an example embodiment.
FIG. 6 is a block diagram illustrating a base station according to an example embodiment.

### DETAILED DESCRIPTION

Reference will be made in detail to embodiments of the present disclosure. Throughout the descriptions with reference to the accompanying drawings, unless specified or limited otherwise, the same or similar elements and the elements are denoted by the same reference numeral in different drawings. The implementations described in the following embodiments shall not be construed to represent all implementations of the present disclosure. Rather, they are merely some examples of the apparatus and method according to some aspects of the present disclosure, as described in the claims.

The network structure and business scenarios described in the embodiments of the present disclosure are used to better explain the technical solutions of the present disclosure, but not constructed to limit the technical solutions of the present disclosure. It would be appreciated by those skilled in the art that with the evolution of network structure and the emergence of new business scenarios, the technical solutions of the present disclosure may also be suitable to similar technical problems.

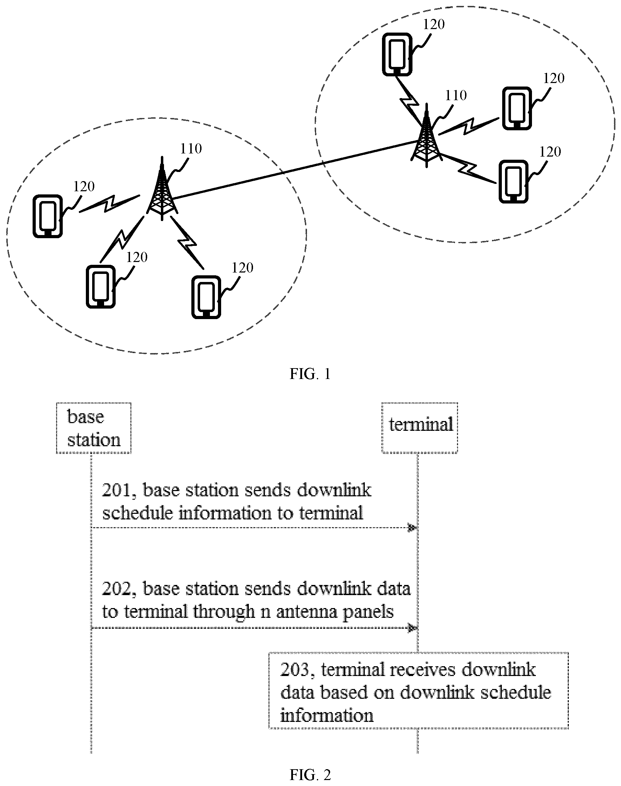

FIG. 1 is a schematic diagram of a network structure according to an embodiment of the present disclosure. The network structure may include a base station 110 and a terminal 120.

The base station is deployed in an access network. The access network in the 5G NR system may be referred to as NG-RAN (New Generation-Radio Access Network). Communications between the base station 110 and the terminal 120 may be implemented by some new-radio techniques, for example a cellar network technique.

The base station 110 may be a device deployed in the access network and configured for providing a wireless communication function to the terminal 120. The base station 110 may include various forms of macro base stations, micro stations, relay stations, access points and so on. In systems using different wireless access technologies, the device with the function of the base station may be designated differently, for example, gNodeB or gNB in the 5G NR system. With the evolution of communication technology, the designation "base station" may be changed. For ease of description, in the embodiments of the present disclosure, the above devices for providing the wireless communication function to the terminal 120 are collectively called "base station".

There may be multiple terminals 120. One or more terminals 120 may be disposed in a cell managed by the base station 110. The terminal 120 may include various handheld devices, vehicle-mounted devices, wearable devices, computing devices that have the wireless communication function or other processing devices connected to wireless modems, as well as various forms of user equipment (UEs), mobile stations (MSs), terminal devices and so on. For ease of description, in the embodiments of the present disclosure, the above mentioned devices are collectively called "terminal".

"5G NR system" in the embodiments of the present disclosure may also be called "5G system" or "NR system", which may be understood by those skilled. The technical solutions described in the present disclosure may be suitable to the 5G NR system, or to a subsequent evolution system of the 5G NR system.

Before introduce the embodiments of the present disclosure, some terms involved in the present disclosure will be explained below.

HARQ entity, used to maintain a certain number of HARQ processes, may send a TB received from a physical layer and corresponding HARQ information (such as HARQ process number, NDI (New data indicator) and so on) to a corresponding HARQ process.

HARQ process, is used to receive a TB and corresponding HARQ information from the HARQ entity and determine whether the TB is a re-transmitted TB.

HARQ process number, is identification information of the HARQ process. Different HARQ processes use different HARQ process numbers for distinguishing from each other.

As mentioned above, in the 5G NR system, the base station and the terminal may use beams to receive and send information. For downlink transmission, the base station may use beams to send DCI (Downlink Control Information) and downlink data to the terminal. DCI is sent through a PDCCH (Physical Downlink Control Channel) and the downlink data is sent through a PDSCH (Physical Downlink Shared Channel).

When the base station has multiple antenna panels, if communication between the multiple antenna panels is not an ideal backhaul, there may be a large time delay in the communication between the multiple antenna panels. In this case, the PDCCHs tend to be sent through the multiple antenna panels to the terminal separately, to schedule the PDSCHs separately. This downlink schedule mode may be referred to as multi-PDCCH. If the communication between the multiple antenna panels is an ideal backhaul, there is no time delay in the communication between the multiple antenna panels. In this case, the base station tends to send one PDCCH to the terminal and simultaneously schedule the multiple antenna panels through the PDCCH to send the downlink data. This downlink schedule mode may be referred to as single-PDCCH.

In certain embodiments of the present disclosure, for the downlink schedule modes, multi-PDDCH and single-PDCCH, HARQ process schemes for the multiple antenna panels are provided, respectively. In the following, the technical solutions of the present disclosure will be described in detail in combination with specific embodiments.

FIG. 2 is a flowchart of a method for sending downlink data according to an embodiment of the present disclosure. The method may be applied in the network structure as illustrated in FIG. 1. The method may include the following blocks 201-204.

At block 201, a base station sends downlink schedule information to a terminal.

The downlink schedule information is configured to inform the terminal of configuration information used to send downlink data to the terminal through n antenna panels of the base station, where n is an integer greater than 1. In the embodiment, the base station has a plurality of antenna panels, and may send the downlink data to the terminal through the plurality of antenna panels. In the embodiment, the base station sends the downlink data to the same terminal through the plurality of antenna panels. The plurality of antenna panels may belong to a same TRP (Transmitter Receiver Point), or belong to different TRPs. In other words, one base station may have one or more TRPs, and each TRP may have one or more antenna panels. Different antenna panels correspond to different beam directions.

Alternatively, the above configuration information includes resource configuration information and HARQ configuration information. The resource configuration information is configured to inform the terminal of resources used by the n antenna panels to send the downlink data to the terminal. The resource may include, but be not limited to any one or a combination of the following: time domain resource, frequency domain resource, code domain resource, or airspace domain resource. The airspace domain resource may refer to the beam direction. The terminal may know the resources used by each antenna panel of the base station to send the downlink data based on the resource configuration information, and further receive the downlink data on respective resources. The HARQ configuration information is configured to inform the terminal of HARQ configurations used by the n antenna panels to send the downlink data to the terminal. The HARQ configuration may include an HARQ process number, NDI, RV (Redundancy Version) or other information. The terminal may know the HARQ configuration used by each antenna panel of the base station to send the downlink data, and further receive the downlink data in a correct way.

In an embodiment, the downlink schedule information includes the HARQ process number corresponding to the downlink data sent through each of the n antenna panels. For example, the base station has two antenna panels, Panel#0 and Panel#1. First downlink data needs to be sent to a terminal through Panel#0, and second downlink data needs to be sent to the terminal through Panel#1. The downlink schedule information sent by the base station to the terminal includes the HARQ process number corresponding to the first downlink data sent through Panel#0 and the HARQ process number corresponding to the second downlink data sent through Panel#1. In this way, after the terminal receives the downlink schedule information, the terminal may know the HARQ process number corresponding to the downlink data sent through each antenna panel.

At block 202, the base station sends the downlink data to the terminal through the n antenna panels.

Still referring to the above example, the base station sends the first downlink data to the terminal through Panel#0, and sends the second downlink data to the terminal through Panel#1.

The above downlink data may be business data which is data related to businesses. For different businesses, the business data may contain different contents.

Alternatively, the downlink data sent through different antenna panels may be distinguished in the following way. Taking the downlink data sent through the i^{th} antenna panel of the n antenna panels as an example, the PDSCH may be scrambled using the identification information of the i^{th} antenna panel, or a frequency domain resource or a code domain resource of a DMRS (Demodulation Reference Signal) which is configured to demodulate the PDSCH and corresponds to the i^{th} antenna panel may be used to send, where i is a positive integer less than or equal to n. The identification information of the i^{th} antenna panel is used to uniquely identify the i^{th} antenna panel and different antenna panels have different identification information. The frequency domain resource of the DMRS corresponding to the i^{th} antenna panel refers to the frequency domain resource occupied by the DMRS for demodulating the PDSCH when the PDSCH is sent through the i^{th} antenna panel. Different antenna panels correspond to different frequency domain resources of the DMRS. The terminal may determine the antenna panel through which the downlink data is sent based on the received frequency domain resource occupied by the DMRS for demodulating the PDSCH. The code domain resource of the DMRS corresponding to the i^{th} antenna panel refers to the code domain resource occupied by the DMRS for demodulating the PDSCH when the PDSCH is sent through the i^{th} antenna panel. Different antenna panels correspond to different code domain resources of DMRS. The terminal may determine the antenna panel through which the downlink data is sent based on the received code domain resource occupied by the DMRS for demodulating the PDSCH. Of course, in addition to the above two ways, other ways may be used to distinguish the downlink data sent through different antenna panels. For example, when the downlink data is sent through the i^{th} antenna panel, the identification information of the i^{th} antenna panel together with the downlink data are sent to the terminal. The above ways provided in the embodiment are merely exemplary and explanatory, which are not constructed to limit the technical solutions of the present disclosure.

By distinguishing the downlink data sent through different antenna panels, the terminal may know the antenna panel through which the downlink data is sent after receiving the downlink data, and further determine the HARQ process number corresponding to the downlink data by combining with the downlink schedule information. Further, if the downlink data is re-transmitted data, based on the HARQ process number corresponding to the downlink data, the terminal may combine the downlink data and previously received downlink data corresponding to the same HARQ process number for receiving and decoding.

At block 203, the terminal receives the downlink data based on the downlink schedule information.

As mentioned above, in addition to the HARQ configuration information used to send the downlink data through each antenna panel, the downlink schedule information further includes the resource configuration information used to send the downlink data through each antenna panel. Taking the i^{th} antenna panel as an example, the resource configuration information used to send the downlink data through the i^{th} antenna panel is configured to inform the terminal of the resource used to send the downlink data through the i^{th} antenna panel to the terminal, for example, the time, frequency, code domain, or airspace domain resource, and the terminal receives the downlink data on the corresponding resource based on the resource configuration information.

The terminal receives the downlink data sent through the n antenna panels based on the downlink schedule information. After receiving target downlink data, the terminal determine the target antenna panel through which the target downlink data is sent, and determine the HARQ process number corresponding to the target downlink data by combining with the HARQ process number contained in the downlink schedule information. Further, if the target downlink data is re-transmitted data, based on the HARQ process number corresponding to the target downlink data, the terminal may combine the target downlink data and previously received downlink data with the same HARQ process number for receiving and decoding.

In conclusion, in the technical solution of the present disclosure, by including the HARQ process number corresponding to the downlink data sent through each antenna panel in the downlink schedule information sent by the base station to the terminal that is used to schedule the plurality of antenna panels of the base station for sending the downlink data to the terminal, an HARQ process scheme for the plurality of antenna panels is provided, such that the HARQ process numbers corresponding to the downlink data sent through the plurality of antenna panels may be used by the terminal for distinguishing, first-time transmitted data corresponding to certain re-transmitted data may be known accurately, and the re-transmitted data and the first-time transmitted data may be received and decoded jointly, thus improving throughput capacity.

In an alternative embodiment based on the embodiment in FIG. 2, the downlink data sent through the n antenna panels corresponds to separate HARQ entities and HART processes.

For example, the base station has two antenna panels, Panel#0 and Panel#1. When downlink data is sent through Panel#0 and Panel#1to the terminal, separate HARQ entities and HARQ processes are used. For example, the HARQ process in HARQ entity 1 corresponding to Panel#0 has a maximum process number of a, the HARQ process numbers corresponding to the downlink data sent through Panel#0 are 0~a-1, where a is an integer greater than 1. The HARQ process in HARQ entity 2 corresponding to Panel#1 has a maximum process number of b, the HARQ process numbers corresponding to the downlink data sent through Panel#1 are 0~b-1, where b is an integer greater than 1. The above a and b may have different values or the same value, for example a and b both are 16.

In this case, the terminal may distinguish the HARQ entities and HARQ process numbers corresponding to the downlink data from different antenna panels using the following methods.
1, when the downlink schedule mode is multi-PDCCH, PDCCHs for PDSCH scheduling may be sent to the terminal separately through multiple antenna panels. In this case, the base station sends n DCIs to the terminal through the n antenna panels, respectively. The DCI sent through the i^{th} antenna panel of the n antenna panels is configured to inform the terminal of the configuration information used to send the downlink data through the i^{th} antenna panel to the terminal, where i is a positive integer less than or equal to n. The DCI sent through the i^{th} antenna panel includes the HARQ process number corresponding to the downlink data sent through the i^{th} antenna panel.

For example, the base station has two antenna panels, Panel#0 and Panel#1. For any antenna panel, the DCI carried on the PDCCH sent through the antenna panel can be used to merely schedule resources of the antenna panel to send the downlink data, but cannot schedule resources of other antenna panels to send the downlink data. In other words, the DCI carried on the PDCCH sent through Panel#0 can schedule merely resources of Panel#0 for sending the downlink data, but cannot schedule resources of Panel#1 for sending the downlink data. Similarly, the DCI carried on the PDCCH sent through Panel#1 can schedule merely resources of Panel# 1 for sending the downlink data, but cannot schedule resources of Panel#0 for sending the downlink data. Assuming that first downlink data needs to be sent to the terminal through Panel#0 and send second downlink data needs to be sent to the terminal through Panel#1, the base station sends first DCI to the terminal through Panel#0, the first DCI is used to schedule transmission of the first downlink data to the terminal through Panel#0 and includes the HARQ process number corresponding to the first downlink data. Further, the base station sends second DCI to the terminal through Panel#1, the second DCI is used to schedule transmission of the second downlink data to the terminal through Panel#1 and includes the HARQ process number corresponding to the second downlink data.

Alternatively, the DCIs sent through different antenna panels may be distinguished as follows. Taking the DCI sent through the i^{th} antenna panel to the terminal as an example, identification information of the i^{th} antenna panel can be used to scramble the DCI, or a frequency domain resource or a code domain resource of a DMRS which is used to demodulate the PDCCH and corresponds to the i^{th} antenna panel can be sued to send, or the identification information of the i^{th} antenna panel can be carried in the DCI, or a CORESET (control resource set) corresponding to i^{th} antenna panel can be used to send the DCI, in which PDCCHs of the n antenna panels use different CORESETs respectively. In any of the above ways, after receiving the DCI, the terminal may determine the antenna panel through which the DCI is sent. Since resources of each antenna panel merely can be scheduled separately to send the downlink data, the terminal may know which antenna panel is to be scheduled by using information in the DCI for sending the downlink data, and further determine the HARQ process number corresponding to the downlink data sent through the antenna panel and data identification for identifying new data or old data by combining with the information in the DCI after receiving the downlink data sent through the antenna panel. The identification information of the i^{th} antenna panel is used to enable the terminal to know that the downlink data sent through the i^{th} antenna panel corresponds to the HARQ process number. The identification information may be replaced with HARQ entity identification information. Different antenna panels correspond to different HARQ entities.

2, when the downlink schedule mode is single-PDCCH, the base station sends one PDCCH to the terminal and simultaneously schedules the multiple antenna panels by the PDCCH to send the downlink data to the terminal. In this case, the base station sends target DCI to the terminal through at least one antenna panel. The base station may send the target DCI to the terminal through one antenna panel or through multiple antenna panels, which is not limited herein. The target DCI includes downlink schedule information corresponding to each of the n antenna panels. The downlink schedule information corresponding to the i^{th} antenna panel of the n antenna panels is configured to inform the terminal of the configuration information used to send the downlink data through the i^{th} antenna panel to the terminal, where i is a positive integer less than or equal to n. The downlink schedule information corresponding to the i^{th} antenna panel includes the HARQ process number corresponding to the downlink data sent through the i^{th} antenna panel, and/or identification information of the i^{th} antenna panel.

For example, the base station has two antenna panels, Panel#0 and Panel#1. For any antenna panel, the DCI carried on the PDCCH sent through the antenna panel can be used to schedule both resources of the antenna panel and resources of other antenna panels to send the downlink data. In other words, the DCI carried on the PDCCH sent through Panel#0 can schedule both resources of Panel#0 and resources of Panel#1 to send the downlink data. Similarly, both resources of Panel#1 and resources of Panel#0 can be scheduled by the DCI carried on the PDCCH sent through Panel#1 for sending the downlink data. Assuming that first downlink data needs to be sent to the terminal through Panel#0 and second downlink data needs to be sent to the terminal through Panel#1, the base station sends the target DCI to the terminal through Panel#0 and/or Panel#1, the target DCI includes the downlink schedule information corresponding to Panel#0 and the downlink schedule information corresponding to Panel#1. The downlink schedule information corresponding to Panel#0 is used to schedule transmission of first downlink data to the terminal through Panel#0 and includes the HARQ process number corresponding to the first downlink data and/or the identification information of Panel#0. The downlink schedule information corresponding to Panel#1 is used to schedule transmission of the second downlink data to the terminal through Panel#1 and includes the HARQ process number corresponding to the second downlink data and/or the identification information of Panel#1. The identification information of the i^{th} antenna panel is used to enable the terminal to know that the downlink data sent through the i^{th} antenna panel corresponds to the HARQ process number. The identification information may be replaced with HARQ entity identification information. Different antenna panels correspond to different HARQ entities.

Further, the downlink data sent through the i^{th} antenna panel may include one TB or multiple TBs, for example 2 TBs. When the downlink data sent through the i^{th} antenna panel includes multiple TBs, the multiple TBs correspond to one HARQ process number of one HARQ entity.

Alternatively, the downlink schedule information corresponding to the i^{th} antenna panel may further include MCS (Modulation and Coding Scheme) level, NDI, RV or other information corresponding to each TB contained in the downlink data sent through the i^{th} antenna panel.

In an example, assuming that one TB (denoted as TB 1) is sent to the terminal through Panel#0 every time and one TB (denoted as TB 2) is sent to the terminal through Panel#1 every time, the target DCI sent by the base station through Panel#0 and/or Panel#1 carries the HARQ process number and antenna panel identification information corresponding to TB 1 and the HARQ process number and antenna panel identification information corresponding to TB 2. The HARQ process number corresponding to TB 1 and the HARQ process number corresponding to TB 2 may be the same, for example when both Panel#0 and Panel#1 are scheduled for the first time, both the HARQ process number corresponding to TB 1 and the HARQ process number corresponding to TB 2 are 0. Although the HARQ process number corresponding to TB 1 and the HARQ process number corresponding to TB 2 are the same, TB 1 and TB 2 cannot be combined, because they are different data sent through different antenna panels. The HARQ process number corresponding to TB 1 and the HARQ process number corresponding to TB 2 may be different. For example, TB 1 is successfully received in the first transmission, then the HARQ process number corresponding to TB 1 in the next transmission may be 1, while TB 2 is not successfully received in the first transmission, then the HARQ process number corresponding to TB 2 in the next transmission may be still 0, i.e., equivalent to re-transmission, and the TB 2 with the HARQ process number of 0 transmitted in the two transmissions can be combined for receiving and decoding.

In another example, assuming that two TBs (denoted as TB 1 and TB 2) are sent to the terminal through Panel#0 every time and two TBs (denoted as TB 3 and TB 4) are sent to the terminal through Panel#1 every time, the target DCI sent by the base station through Panel#0 and/or Panel#1 carries the HARQ process number and antenna panel identification information corresponding to TB 1 and TB 2 and the HARQ process number and antenna panel identification information corresponding to TB 3 and TB 4. In other words, TB 1 and TB 2 share the same HARQ process number and the antenna panel identification information. TB 3 and TB 4 share the same HARQ process number and the antenna panel identification information.

In another alternative embodiment based on the embodiment in FIG. 2, the downlink data sent through the n antenna panels to the terminal corresponds to the same HARQ entity.

For example, the base station has two antenna panels, Panel#0 and Panel#1. Panel#0 and Panel#1 correspond to the same HARQ entity when sending the downlink data to the terminal. In this case, if the base station has many antenna panels, then the maximum value of the HARQ process number is increased, for example the maximum value is increased from 16 to 32 or 64, i.e., the HARQ process number needs to be represented by five bits or six bits.

In this case, the HARQ process numbers corresponding to the downlink data sent through different antenna panels may be distinguished by the terminal using the above two methods.

First, when the downlink schedule mode is multi-PDCCH, the base station sends n DCIs to the terminal through the n antenna panels, respectively. The DCI sent through the i^{th} antenna panel of the n antenna panels is configured to inform the terminal of the configuration information used to send the downlink data through the i^{th} antenna panel to the terminal, where i is a positive integer less than or equal to n. the DCI sent through the i^{th} antenna panel includes the HARQ process number corresponding to the downlink data sent through the i^{th} antenna panel.

Second, when the downlink schedule mode is single-PDCCH, the base station sends target DCI to the terminal through at least one antenna panel. The target DCI includes downlink schedule information corresponding to the n antenna panels. The downlink schedule information corresponding to the i^{th} antenna panel of the n antenna panels is configured to inform the terminal of the configuration information used to send the downlink data through the i^{th} antenna panel to the terminal, where i is a positive integer less than or equal to n. The downlink schedule information corresponding to the i^{th} antenna panel includes the HARQ process number corresponding to the downlink data sent through the i^{th} antenna panel, and/or identification information of the i^{th} antenna panel.

Regarding more details about the above two methods, reference can be made to the foregoing embodiments, which is not elaborated again.

In an example, the downlink data sent through the n antenna panels to the terminal corresponds to different HARQ process numbers.

For example, the base station has two antenna panels, Panel#0 and Panel#1. The downlink data sent through Panel#0 and Panel#1 to a certain terminal corresponds to the same HARQ entity but uses different HARQ process numbers. For example the maximum HARQ process number is 15. The downlink data sent through Panel#0 to the terminal may correspond to even HARQ process numbers 0, 2, 4, ..., and 14, while the downlink data sent through Panel#1 to the terminal may correspond to odd HARQ process numbers 1, 3, 5, ..., and 15. Or, the downlink data sent through Panel#0 to the terminal may correspond to the HARQ process numbers 0 to 7, while the downlink data sent through Panel#1 to the terminal may correspond to the HARQ process numbers 8 to15. Or, the number of the assigned HARQ process numbers is determined based on a load condition of each antenna panel. For example, Panel#0 has a large load, the downlink data sent through Panel#0 to the terminal may correspond to the HARQ process numbers 0 to 10. Panel#1 has a small load, the downlink data sent through Panel#1 to the terminal may correspond to the HARQ process numbers 11 to 15. Further, the HARQ process numbers assigned to each antenna panel may be informed to the terminal by RRC (Radio Resource Control) signaling and/or MAC (Medium Access Control) signaling.

In another example, in the n antenna panels, the downlink data sent through at least two antenna panels to the terminal corresponds to the same HARQ process number.

For example, the base station has two antenna panels, Panel#0 and Panel#1. The downlink data sent through Panel#0 and Panel#1 to a certain terminal corresponds to the same HARQ entity and uses the same HARQ process. For example the maximum HARQ process number of the HARQ process is 15. Different from the above example, in this example, the downlink data sent through Panel#0 and Panel#1 to the terminal may be allowed to correspond to the same HARQ process number. In this way, data sent through Panel#0 that is not successfully received by the terminal may be re-transmitted through Panel#1, and data sent through Panel#1 that is not successfully received by the terminal may be re-transmitted through Panel#0. The first-time transmitted data and the re-transmitted data are sent through two different antenna panels, which may improve reliability. Correspondingly, the terminal may combine the first-time transmitted data and the re-transmitted data sent through two different antenna panels for receiving and decoding. Further, different data may be sent through the two antenna panels to improve throughput capacity.

In conclusion, in the technical solution of the present disclosure, an HARQ process scheme for multiple antenna panels is provided. The downlink data sent through the multiple antenna panels to the terminal may correspond to separate HARQ entities and HARQ processes, or correspond to the same HARQ process or different HARQ processes in the same HARQ entity.

When the downlink data sent through the multiple antenna panels to the terminal corresponds to separate HARQ entities and HARQ processes, the HARQ entities and HARQ processes corresponding to the multiple antenna panels are independent completely. The downlink data corresponding to the HARQ process number may be distinguished using the identification information of the antenna panels, which is more suitable to the situation that the communication between the multiple antenna panels is not an ideal backhaul, i.e., the situation that the downlink schedule mode is multi-PDCCH.

When the downlink data sent through the multiple antenna panels to the terminal corresponds to the same HARQ process or different HARQ processed in the same HARQ entity, if merely data which is transmitted incorrectly through itself can be re-transmitted through the antenna panel, the downlink data sent through the multiple antenna panels to the terminal corresponds to different HARQ process numbers. If data which is transmitted incorrectly through the antenna panel can be re-transmitted through another antenna panel, the downlink data sent through the two antenna panels to the terminal may correspond to the same HARQ process number, such that the first-time transmitted data and the re-transmitted data may be sent through two different antenna panels, thus improving the reliability.

The above method embodiments are described from the perspective of interaction between the terminal and the base station, but the above steps related to the terminal may be implemented as a method for receiving downlink data at the terminal side, and the step s related to the base station may be implemented as a method for sending downlink data at the base station side.

The apparatus embodiments will be described below, which may be used to perform the above method embodiments. For details not described in the apparatus embodiments, reference can be made to the above method embodiments.

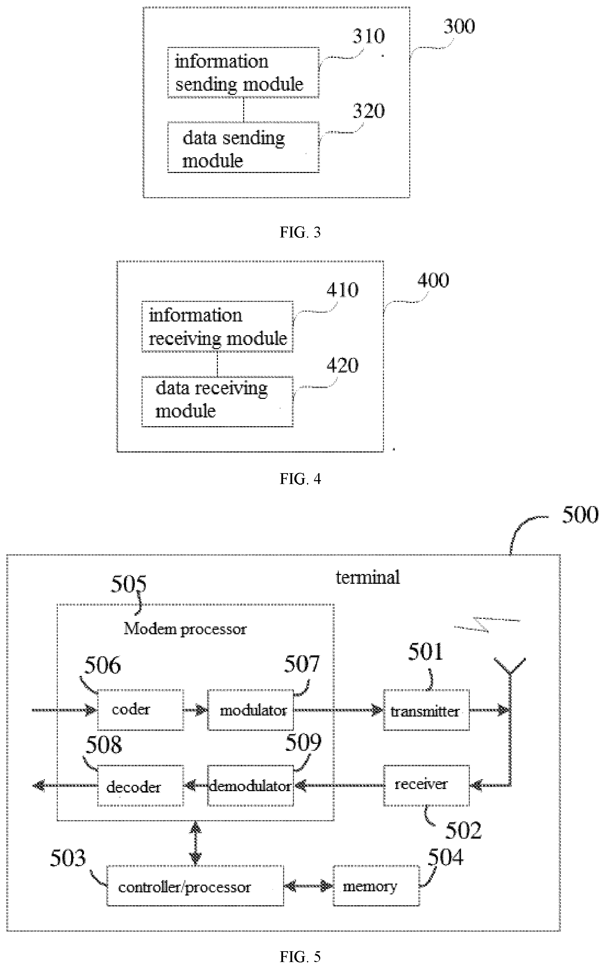

FIG. 3 is a block diagram of an apparatus for sending downlink data according to an embodiment of the present disclosure. The apparatus has a function capable to implement the above method at the base station side, the function may be implemented by hardware, or by software corresponding to the hardware. The apparatus may be the base station described above, or may be configured in the base station. The apparatus 300 may include an information sending module 310 and a data sending module 320.

The information sending module 310 is configured to send downlink schedule information to a terminal, in which the downlink schedule information is configured to inform the terminal of configuration information used to send downlink data through n antenna panels of the base station and includes a hybrid automatic repeat request (HARQ) process number corresponding to the downlink data sent through each of the n antenna panels, where n is an integer greater than 1.

The data sending module 320 is configured to send the downlink data to the terminal through the n antenna panels.

In conclusion, in the technical solution of the present disclosure, by including the HARQ process number corresponding to the downlink data sent through each antenna panel in the downlink schedule information sent by the base station to the terminal that is used to schedule the plurality of antenna panels of the base station for sending the downlink data to the terminal, an HARQ process scheme for the plurality of antenna panels is provided, such that the HARQ process numbers corresponding to the downlink data sent through the plurality of antenna panels may be used by the terminal for distinguishing, first-time transmitted data corresponding to certain re-transmitted data may be known accurately, and the re-transmitted data and the first-time transmitted data may be received and decoded jointly, thus improving throughput capacity.

In an alternative embodiment based on the embodiment in FIG. 3, the downlink data sent through the n antenna panels corresponds to separate HARQ entities and HARQ processes, respectively.

In an alternative embodiment based on the embodiment in FIG. 3, the downlink data sent through the n antenna panels corresponds to a same HARQ entity.

Alternatively, the downlink data sent through the n antenna panels corresponds to different HARQ process numbers, respectively.

Alternatively, the downlink data sent through at least two antenna panels of the n antenna panels corresponds to a same HARQ process number.

In another alternative embodiment based on the embodiment in FIG. 3 or any of the above embodiments, the information sending module 310 is configured to send n DCIs (Downlink Control Information) to the terminal through the n antenna panels. The DCI sent through an i^{th} antenna panel of the n antenna panels is configured to inform the terminal of the configuration information used to send the downlink data through the i^{th} antenna panel. The DCI sent through the i^{th} antenna panel includes the HARQ process number corresponding to the downlink data sent through the i^{th} antenna panel, where i is a positive integer less than or equal to n.

Alternatively, for the DCI sent through the i^{th} antenna panel to the terminal, identification information of the i^{th} antenna panel is used to scramble the DCI, or a frequency domain resource or a code domain resource of a demodulation reference signal (DMRS) which is used for demodulating a physical downlink control channel (PDCCH) and corresponds to the i^{th} antenna panel is used to send; or identification information of i^{th} antenna panel is carried in the DCI sent through the i^{th} antenna panel; or a control resource set (CORESET) corresponding to i^{th} antenna panel is used to send the DCI, in which PDCCHs of the n antenna panels use different CORESETs respectively.

In another alternative embodiment based on the embodiment in FIG. 3 or any of the above embodiments, the information sending module 310 is configured to send a target DCI to the terminal through at least one antenna panel. The target DCI includes the downlink schedule information corresponding respectively to the n antenna panels. The downlink schedule information corresponding to the i^{th} antenna panel includes the HARQ process number corresponding to the downlink data sent through the i^{th} antenna panel and/or identification information of the i^{th} antenna panel, where i is a positive integer less than or equal to n.

The identification information of the i^{th} antenna panel is used to enable the terminal to know that the downlink data sent through the i^{th} antenna panel corresponds to the HARQ process number. The identification information of the i^{th} antenna panel may be replaced with HARQ entity identification information. Different antenna panels correspond to different HARQ entities. Or, all the antenna panels correspond to the same HARQ entity.

Alternatively, the downlink data sent through the i^{th} antenna panel includes one transport block (TB); or the downlink data sent through the i^{th} antenna panel includes a plurality of TBs and the plurality of TBs correspond to one HARQ process number of one HARQ entity.

In another alternative embodiment based on the embodiment in FIG. 3 or any of the above embodiments, for the downlink data sent through the i^{th} antenna panel to the terminal, identification information of the i^{th} antenna panel is used to scramble the downlink data, or a frequency domain resource or a code domain resource of a demodulation reference signal (DMRS) which is used for demodulating a physical downlink control channel (PDCCH) and corresponds to the i^{th} antenna panel is used to send, where i is a positive integer less than or equal to n.

FIG. 4 is a block diagram of an apparatus for receiving downlink data according to an embodiment of the present disclosure. The apparatus has a function capable to implement the above method at the terminal side, the function may be implemented by hardware, or by software corresponding to the hardware. The apparatus may be the terminal described above, or may be configured in the terminal. The apparatus 400 may include an information receiving module 410 and a data receiving module 420.

The information receiving module 410 is configured to receive downlink schedule information sent by a base station, in which the downlink schedule information is configured to inform the terminal of configuration information used to send downlink data through n antenna panels of the base station and includes a hybrid automatic repeat request (HARQ) process number corresponding to the downlink data sent through each of the n antenna panels, where n is an integer greater than 1.

The data receiving module 420 is configured to receive the downlink data based on the downlink schedule information.

In conclusion, in the technical solution of the present disclosure, by including the HARQ process number corresponding to the downlink data sent through each antenna panel in the downlink schedule information sent by the base station to the terminal that is used to schedule the plurality of antenna panels of the base station for sending the downlink data to the terminal, an HARQ process scheme for the plurality of antenna panels is provided, such that the HARQ process numbers corresponding to the downlink data sent through the plurality of antenna panels may be used by the terminal for distinguishing, first-time transmitted data corresponding to certain re-transmitted data may be known accurately, and the re-transmitted data and the first-time transmitted data may be received and decoded jointly, thus improving throughput capacity.

In another alternative embodiment based on the embodiment in FIG. 4, the information receiving module 410 is configured to receive n DCIs sent by the base station through the n antenna panels. The DCI sent through an i^{th} antenna panel of the n antenna panels is configured to inform the terminal of the configuration information used to send the downlink data through the i^{th} antenna panel. The DCI sent through the i^{th} antenna panel includes the HARQ process number corresponding to the downlink data sent through the i^{th} antenna panel, where i is a positive integer less than or equal to n.

In another alternative embodiment based on the embodiment in FIG. 4, the information receiving module 410 is configured to receive a target DCI sent by the base station through at least one antenna panel. The target DCI includes the downlink schedule information corresponding respectively to the n antenna panels. The downlink schedule information corresponding to the i^{th} antenna panel includes the HARQ process number corresponding to the downlink data sent through the i^{th} antenna panel and/or identification information of the i^{th} antenna panel, where i is a positive integer less than or equal to n.

It should be noted that the division of modules in the above apparatus that is taken when implementing the functions is only for illustration. In actual applications, the functions may be assigned to different modules for implementation according to requirements, i.e., the apparatus may be divided into different modules so as to complete all or part of functions described above.

With respect to the apparatus according to the embodiment described above, the ways to perform operations by respective modules have been described in the associated method embodiments, which are not described here.

Embodiments of the present disclosure further provide an apparatus for sending downlink data, which may implement the method for sending downlink data provided in the present disclosure. The apparatus may be the base station described above or may be configured in the base station. The apparatus includes a processor and a memory configured to store instructions executable by the processor.

The processor is configured to send downlink schedule information to a terminal, in which the downlink schedule information is configured to inform the terminal of configuration information used to send downlink data through n antenna panels of the base station and includes a hybrid automatic repeat request (HARQ) process number corresponding to the downlink data sent through each of the n antenna panels, where n is an integer greater than 1; and send the downlink data to the terminal through the n antenna panels.

Alternatively, the processor is configured to send n DCIs (Downlink Control Information) to the terminal through the n antenna panels. The DCI sent through an i^{th} antenna panel of the n antenna panels is configured to inform the terminal of the configuration information used to send the downlink data through the i^{th} antenna panel. The DCI sent through the i^{th} antenna panel includes the HARQ process number corresponding to the downlink data sent through the i^{th} antenna panel, where i is a positive integer less than or equal to n.

Alternatively, the processor is configured to send a target DCI to the terminal through at least one antenna panel. The target DCI includes the downlink schedule information corresponding respectively to the n antenna panels. The downlink schedule information corresponding to the i^{th} antenna panel includes the HARQ process number corresponding to the downlink data sent through the i^{th} antenna panel and/or identification information of the i^{th} antenna panel, where i is a positive integer less than or equal to n.

Embodiments of the present disclosure further provide an apparatus for receiving downlink data, which may implement the method for receiving downlink data provided in the present disclosure. The apparatus may be the terminal described above or may be configured in the terminal. The apparatus includes a processor and a memory configured to store instructions executable by the processor.

The processor is configured to receive downlink schedule information sent by a base station, in which the downlink schedule information is configured to inform the terminal of configuration information used to send downlink data through n antenna panels of the base station and includes a hybrid automatic repeat request (HARQ) process number corresponding to the downlink data sent through each of the n antenna panels, where n is an integer greater than 1; and receive the downlink data based on the downlink schedule information.

Alternatively, the processor is configured to receive n DCIs sent by the base station through the n antenna panels. The DCI sent through an i^{th} antenna panel of the n antenna panels is configured to inform the terminal of the configuration information used to send the downlink data through the i^{th} antenna panel. The DCI sent through the i^{th} antenna panel includes the HARQ process number corresponding to the downlink data sent through the i^{th} antenna panel, where i is a positive integer less than or equal to n.

Alternatively, the processor is configured to receive a target DCI sent by the base station through at least one antenna panel. The target DCI includes the downlink schedule information corresponding respectively to the n antenna panels. The downlink schedule information corresponding to the i^{th} antenna panel includes the HARQ process number corresponding to the downlink data sent through the i^{th} antenna panel and/or identification information of the i^{th} antenna panel, where i is a positive integer less than or equal to n.

The solution according to the embodiment of the present disclosure is described from the perspective of interaction between the base station and the terminal. It should be understood that the terminal and the base station include respective hardware structures and/or software modules for performing the above functions. In combination with the units and algorithm steps of the examples described in the embodiments disclosed in this specification, the embodiments of the present disclosure may be implemented by hardware, or a combination of hardware and computer software. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

FIG. 5 is a block diagram of a terminal according to an example embodiment.

The terminal 500 includes a transmitter 501, a receiver 502 and a processor 503. The processor 503 may be a controller, and is denoted as "controller/processor 503" in FIG. 5. Alternatively, the terminal 500 may further include a Modem processor 505 which may include a coder 506, a modulator 507, a decoder 508 and a demodulator 509.

In an example, the transmitter 501 performs adjustment (for example, analog conversion, filtering, amplification, up-conversion and so on) on an output sample and generates an uplink signal. The uplink signal is transmitted to the base station described above via the antenna. On the uplink, the antenna receives a downlink signal transmitted by the base station described above. The receiver 502 performs adjustment (for example, filtering, amplification, down-conversion, digitalization and so on) on the signal received from the antenna and provides an input sample. In the Modem processor 505, the coder 506 receives business data and signaling messages to be sent on the uplink and processes the business data and signaling messages (for example, by normalizing, encoding and interweaving). The modulator 507 further processes the encoded business data and signaling messages (for example by signal mapping and modulating) and provides an output sample. The demodulator 509 processes the input sample (for example by demodulating) and provides a symbol estimation. The decoder 508 processes the symbol estimation (for example, by de-interweaving and decoding) and provides decoded data and signaling messages to be sent to the terminal 500. The coder 506, the modulator 507, the demodulator 509 and the decoder 508 may be implemented by the integrated Modem processor 505. Those units perform operations based on the wireless access technology (for example, the access technology of LTE and other evolution systems) adopted by the wireless access network. It should be noted that, when the terminal 500 does not include the Modem processor 505, the above functions of the Modem processor 505 may be also implemented by the processor 503.

The processor 503 is configured to control and manage actions of the terminal 500, to perform processing procedures conducted by the terminal 500 described in the foregoing embodiments. For example, the processor 503 is further configured to perform respective steps at the terminal side described in the foregoing embodiments, and/or other steps of the technical solutions described in the embodiments of the present disclosure.

Further, the terminal 500 may further include a memory 504 configured to store program codes and data of the terminal 500.

It should be understood that FIG. 5 merely shows a simplified design of the terminal 500. In actual applications, the terminal 500 may include any number of transmitters, receivers, processors, Modem processors, memories and so on, and any terminal which may implement the embodiment of the present disclosure falls into the scope of the embodiment of the present disclosure.

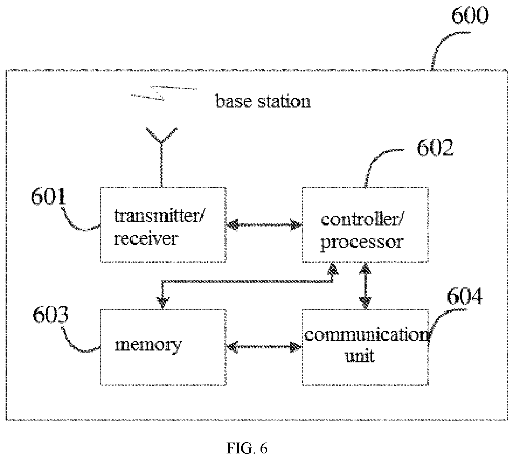

FIG. 6 is a block diagram of a base station according to an example embodiment.

The base station 600 includes a transmitter/receiver 601 and a processor 602. The processor 602 may be a controller, and is denoted as "controller/processor 602" in FIG. 6. The transmitter/receiver 601 is configured to support data transmission between the base station and the terminal described in the foregoing embodiments, and support communication between the base station and other network entities. The processor 602 performs various functions to communicate with the terminal. On the uplink, an uplink single from the terminal may be received via the antenna, demodulated by the receiver 601 (for example, demodulating a high-frequency signal to a baseband signal), and further processed by the processor 602 to restore the business data and signaling messages sent by the terminal. On the downlink, the business data and signaling messages are processed by the processor 602, modulated by the transmitter 601 (for example, modulating a baseband signal to a high-frequency signal) to generate a downlink signal, which is transmitted to the terminal via the antenna. It should be noted that the above modulation and demodulation functions may also be implemented by the processor 602. For example, the processor 602 is further configured to perform respective steps at the base station side described in the foregoing embodiments, and/or other steps of the technical solutions described in the embodiments of the present disclosure.

Further, the base station 600 may further include a memory 603 configured to store program codes and data of the base station 600. The base station 600 may further include a communication unit 604. The communication unit 604 is configured to support the communication between the base station and other network entities (such as network devices in the core network). For example in the 5G NR system, the communication unit 604 may be an NG-U interface, configured to support the communication between the base station 600 and a UPF (User Plane Function) entity. Or, the communication unit 604 may be an NG-C interface, configured to support the communication between the base station 600 and an AMF (Access and Mobility Management Function) entity.

It should be understood that FIG. 6 merely shows a simplified design of the base station 600. In actual applications, the base station 600 may include any number of transmitters, receivers, processors, controllers, memories, communication units and so on, and any base station which may implement the embodiment of the present disclosure falls into the scope of the embodiment of the present disclosure.

Embodiments of the present disclosure further provide a non-transitory computer storage medium. The non-transitory computer-readable storage medium has computer programs stored thereon. When the computer programs are executed by a processor of a terminal, the method for receiving downlink data at the terminal side described above may be implemented.

Embodiments of the present disclosure further provide a non-transitory computer storage medium. The non-transitory computer-readable storage medium has computer programs stored thereon. When the computer programs are executed by a processor of a base station, the method for sending downlink data at the base station side described above may be implemented.

It should be understood that, as used herein, "a plurality of" means two or more than two, unless specified otherwise. The term "and/or" represents an association relation between associated listed items, containing three association relations. For example, A and/or B is satisfied by any one of the following: A exists separately, B exists separately, and both A and B exist. The symbol "/" generally represents a relation of "or" between the associated listed items.

Other embodiments of the invention will be apparent to those skilled in the art from consideration of the specification and practice of the invention disclosed here.
The invention is defined by the appended claims.

## Claims

1. A method for sending downlink data comprising:
sending (201) by a base station through one antenna panel downlink control information, DCI, to a terminal in a downlink schedule mode of single-Physical Downlink Control Channel, wherein the DCI is configured to inform the terminal of configuration information used to send downlink data through n antenna panels of the base station, wherein the DCI comprises downlink schedule information corresponding to each of the n antenna panels, the downlink schedule information corresponding to an i^{th} antenna panel comprises a hybrid automatic repeat request, HARQ, process number corresponding to downlink data sent through the i^{th} antenna panel, the downlink data sent through at least two antenna panels to the terminal corresponds to the same HARQ process number; where n is an integer greater than 1, i is a positive integer less than or equal to n, and the n antenna panels comprise a first antenna panel and a second antenna panel, the DCI comprises a first HARQ process number corresponding to first downlink data and a second HARQ process number corresponding to second downlink data, wherein the first downlink data is sent to the terminal through the first antenna panel, and the second downlink data is sent to the terminal through the second antenna panel, wherein the n antenna panels are associated with n transmitter receiver points, TRPs, respectively; and
sending (202) by the base station the downlink data to the terminal through the n antenna panels.

2. The method of claim 1, wherein,
the downlink data sent through the i^{th} antenna panel comprises one transport block, TB;
or
the downlink data sent through the i^{th} antenna panel comprises a plurality of TBs and the plurality of TBs correspond to one HARQ process number in one HARQ entity.

3. A method for receiving downlink data comprising:
receiving by a terminal downlink control information, DCI, sent by a base station through one antenna panel in a downlink schedule mode of single-Physical Downlink Control Channel, wherein the DCI is configured to inform the terminal of configuration information used to send downlink data through n antenna panels of the base station, wherein the DCI comprises downlink schedule information corresponding to each of the n antenna panels, the downlink schedule information corresponding to an i^{th} antenna panel comprises a hybrid automatic repeat request, HARQ, process number corresponding to downlink data sent through the i^{th} antenna panel, the downlink data sent through at least two antenna panels to the terminal corresponds to the same HARQ process number; where n is an integer greater than 1, i is a positive integer less than or equal to n, and the n antenna panels comprise a first antenna panel and a second antenna panel, the DCI comprises a first hybrid automatic repeat request, HARQ, process number corresponding to first downlink data and a second HARQ process number corresponding to second downlink data, wherein the first downlink data is sent to the terminal through the first antenna panel, and the second downlink data is sent to the terminal through the second antenna panel, wherein the n antenna panels are associated with n transmitter receiver points, TRPs, respectively; and
receiving (203) by the terminal the downlink data sent by the base station through the n antenna panels.

4. An apparatus (300) for sending downlink data, applicable in a base station comprising:
an information sending module (310), configured to send through one antenna panel downlink control information, DCI, to a terminal in a downlink schedule mode of single-Physical Downlink Control Channel, wherein the DCI is configured to inform the terminal of configuration information used to send downlink data through n antenna panels of the base station, wherein the DCI comprises downlink schedule information corresponding to each of the n antenna panels, the downlink schedule information corresponding to an i^{th} antenna panel comprises a hybrid automatic repeat request, HARQ, process number corresponding to downlink data sent through the i^{th} antenna panel, the downlink data sent through at least two antenna panels to the terminal corresponds to the same HARQ process number; where n is an integer greater than 1, i is a positive integer less than or equal to n, and the n antenna panels comprise a first antenna panel and a second antenna panel, the DCI comprises a first hybrid automatic repeat request, HARQ, process number corresponding to first downlink data and a second HARQ process number corresponding to second downlink data, wherein the first downlink data is sent to the terminal through the first antenna panel, and the second downlink data is sent to the terminal through the second antenna panel, wherein the n antenna panels are associated with n transmitter receiver points, TRPs, respectively; and
a data sending module (320), configured to send the downlink data to the terminal through the n antenna panels.

5. An apparatus (400) for receiving downlink data, applicable in a terminal comprising:
an information receiving module (410), configured to receive downlink control information, DCI, sent by a base station through one antenna panel in a downlink schedule mode of single-Physical Downlink Control Channel, wherein the DCI is configured to inform the terminal of configuration information used to send downlink data through n antenna panels of the base station, wherein the DCI comprises downlink schedule information corresponding to each of the n antenna panels, the downlink schedule information corresponding to an i^{th} antenna panel comprises a hybrid automatic repeat request, HARQ, process number corresponding to downlink data sent through the i^{th} antenna panel, the downlink data sent through at least two antenna panels to the terminal corresponds to the same HARQ process number; where n is an integer greater than 1, i is a positive integer less than or equal to n,and the n antenna panels comprise a first antenna panel and a second antenna panel, the DCI comprises a first hybrid automatic repeat request, HARQ, process number corresponding to first downlink data and a second HARQ process number corresponding to second downlink data, wherein the first downlink data is sent to the terminal through the first antenna panel, and the second downlink data is sent to the terminal through the second antenna panel, wherein the n antenna panels are associated with n transmitter receiver points, TRPs, respectively; and
a data receiving module (420), configured to receive the downlink data sent by the base station through the n antenna panels.

6. A non-transitory computer-readable storage medium, having computer programs stored thereon, wherein when the computer programs are executed by a processor, steps of the method for sending downlink data according to any of claims 1-2 or steps of the method for receiving downlink data according to claim 3 are implemented.

## Patentansprüche

1. Ein Verfahren zum Senden von Downlink-Daten, umfassend:
Senden (201) von Downlink-Steuerinformationen, DCI, durch eine Basisstation über ein Antennenpanel an ein Terminal in einem Downlink-Zeitplanmodus eines einzelnen Physical Downlink Control Channel, wobei die DCI dazu konfiguriert ist, das Terminal über Konfigurationsinformationen zu informieren, die zum Senden von Downlink-Daten über n Antennenpanels der Basisstation verwendet werden, wobei die DCI Downlink-Zeitplaninformationen umfasst, die jeweils einem der n Antennenpanels entsprechen, wobei die Downlink-Zeitplaninformationen, die einem i-ten Antennenpanel entsprechen, eine Hybrid Automatic Repeat Request, HARQ, -Prozessnummer umfassen, die den über das i-te Antennenpanel gesendeten Downlink-Daten entspricht, wobei die an das Terminal über mindestens zwei Antennenpanels gesendeten Downlink-Daten der gleichen HARQ-Prozessnummer entsprechen; wobei n eine ganze Zahl größer als 1 ist, i eine positive ganze Zahl kleiner oder gleich n ist, und die n Antennenpanels ein erstes Antennenpanel und ein zweites Antennenpanel umfassen, wobei die DCI eine erste HARQ-Prozessnummer entsprechend ersten Downlink-Daten und eine zweite HARQ-Prozessnummer entsprechend zweiten Downlink-Daten umfasst, wobei die ersten Downlink-Daten über das erste Antennenpanel an das Terminal gesendet werden, und die zweiten Downlink-Daten über das zweite Antennenpanel an das Terminal gesendet werden, wobei die n Antennenpanels jeweils mit n Transmitter-Receiver-Punkten, TRPs, assoziiert sind; und
Senden (202) der Downlink-Daten durch die Basisstation an das Terminal über die n Antennenpanels.

2. Das Verfahren nach Anspruch 1, wobei
die über das i-te Antennenpanel gesendeten Downlink-Daten einen Transportblock, TB, umfassen;
oder
die über das i-te Antennenpanel gesendeten Downlink-Daten eine Vielzahl von TBs umfassen und die Vielzahl von TBs einer HARQ-Prozessnummer in einer HARQ-Entität entsprechen.

3. Ein Verfahren zum Empfangen von Downlink-Daten, umfassend:
Empfangen von Downlink-Steuerinformationen, DCI, durch ein Terminal, gesendet von einer Basisstation über ein Antennenpanel in einem Downlink-Zeitplanmodus eines einzelnen Physical Downlink Control Channel, wobei die DCI dazu konfiguriert ist, das Terminal über Konfigurationsinformationen zu informieren, die zum Senden von Downlink-Daten über n Antennenpanels der Basisstation verwendet werden, wobei die DCI Downlink-Zeitplaninformationen umfasst, die jeweils einem der n Antennenpanels entsprechen, wobei die Downlink-Zeitplaninformationen, die einem i-ten Antennenpanel entsprechen, eine Hybrid Automatic Repeat Request, HARQ, -Prozessnummer umfassen, die den über das i-te Antennenpanel gesendeten Downlink-Daten entspricht, wobei die an das Terminal über mindestens zwei Antennenpanels gesendeten Downlink-Daten der gleichen HARQ-Prozessnummer entsprechen; wobei n eine ganze Zahl größer als 1 ist, i eine positive ganze Zahl kleiner oder gleich n ist, und die n Antennenpanels ein erstes Antennenpanel und ein zweites Antennenpanel umfassen, wobei die DCI eine erste HARQ-Prozessnummer entsprechend ersten Downlink-Daten und eine zweite HARQ-Prozessnummer entsprechend zweiten Downlink-Daten umfasst, wobei die ersten Downlink-Daten über das erste Antennenpanel an das Terminal gesendet werden, und die zweiten Downlink-Daten über das zweite Antennenpanel an das Terminal gesendet werden, wobei die n Antennenpanels jeweils mit n Transmitter-Receiver-Punkten, TRPs, assoziiert sind; und
Empfangen (203) der Downlink-Daten durch das Terminal, gesendet von der Basisstation über die n Antennenpanels.

4. Eine Vorrichtung (300) zum Senden von Downlink-Daten, anwendbar in einer Basisstation, umfassend:
ein Informationssende-Modul (310), konfiguriert zum Senden von Downlink-Steuerinformationen, DCI, über ein Antennenpanel an ein Terminal in einem Downlink-Zeitplanmodus eines einzelnen Physical Downlink Control Channel, wobei die DCI dazu konfiguriert ist, das Terminal über Konfigurationsinformationen zu informieren, die zum Senden von Downlink-Daten über n Antennenpanels der Basisstation verwendet werden, wobei die DCI Downlink-Zeitplaninformationen umfasst, die jeweils einem der n Antennenpanels entsprechen, wobei die Downlink-Zeitplaninformationen, die einem i-ten Antennenpanel entsprechen, eine Hybrid Automatic Repeat Request, HARQ, -Prozessnummer umfassen, die den über das i-te Antennenpanel gesendeten Downlink-Daten entspricht, wobei die an das Terminal über mindestens zwei Antennenpanels gesendeten Downlink-Daten der gleichen HARQ-Prozessnummer entsprechen; wobei n eine ganze Zahl größer als 1 ist, i eine positive ganze Zahl kleiner oder gleich n ist, und die n Antennenpanels ein erstes Antennenpanel und ein zweites Antennenpanel umfassen, wobei die DCI eine erste HARQ-Prozessnummer entsprechend ersten Downlink-Daten und eine zweite HARQ-Prozessnummer entsprechend zweiten Downlink-Daten umfasst, wobei die ersten Downlink-Daten über das erste Antennenpanel an das Terminal gesendet werden, und die zweiten Downlink-Daten über das zweite Antennenpanel an das Terminal gesendet werden, wobei die n Antennenpanels jeweils mit n Transmitter-Receiver-Punkten, TRPs, assoziiert sind; und
ein Datensende-Modul (320), konfiguriert zum Senden der Downlink-Daten an das Terminal über die n Antennenpanels.

5. Eine Vorrichtung (400) zum Empfangen von Downlink-Daten, anwendbar in einem Terminal, umfassend:
ein Informationsempfangsmodul (410), konfiguriert zum Empfangen von Downlink-Steuerinformationen, DCI, gesendet von einer Basisstation über ein Antennenpanel in einem Downlink-Zeitplanmodus eines einzelnen Physical Downlink Control Channel, wobei die DCI dazu konfiguriert ist, das Terminal über Konfigurationsinformationen zu informieren, die zum Senden von Downlink-Daten über n Antennenpanels der Basisstation verwendet werden, wobei die DCI Downlink-Zeitplaninformationen umfasst, die jeweils einem der n Antennenpanels entsprechen, wobei die Downlink-Zeitplaninformationen, die einem i-ten Antennenpanel entsprechen, eine Hybrid Automatic Repeat Request, HARQ, -Prozessnummer umfassen, die den über das i-te Antennenpanel gesendeten Downlink-Daten entspricht, wobei die an das Terminal über mindestens zwei Antennenpanels gesendeten Downlink-Daten der gleichen HARQ-Prozessnummer entsprechen; wobei n eine ganze Zahl größer als 1 ist, i eine positive ganze Zahl kleiner oder gleich n ist, und die n Antennenpanels ein erstes Antennenpanel und ein zweites Antennenpanel umfassen, wobei die DCI eine erste HARQ-Prozessnummer entsprechend ersten Downlink-Daten und eine zweite HARQ-Prozessnummer entsprechend zweiten Downlink-Daten umfasst, wobei die ersten Downlink-Daten über das erste Antennenpanel an das Terminal gesendet werden, und die zweiten Downlink-Daten über das zweite Antennenpanel an das Terminal gesendet werden, wobei die n Antennenpanels jeweils mit n Transmitter-Receiver-Punkten, TRPs, assoziiert sind; und
ein Datenempfangsmodul (420), konfiguriert zum Empfangen der von der Basisstation über die n Antennenpanels gesendeten Downlink-Daten.

6. Ein nicht-flüchtiges, computerlesbares Speichermedium, auf dem Computerprogramme gespeichert sind, wobei beim Ausführen der Computerprogramme durch einen Prozessor Schritte des Verfahrens zum Senden von Downlink-Daten gemäß einem der Ansprüche 1-2 oder Schritte des Verfahrens zum Empfangen von Downlink-Daten gemäß Anspruch 3 implementiert werden.

## Revendications

1. Procédé d'envoi de données de liaison descendante, comprenant:
l'envoi (201) par une station de base par le biais d'informations de commande de liaison descendante de panneau d'antenne, DCI, à un terminal dans un mode d'ordonnancement de liaison descendante du canal physique de commande de liaison descendante unique, dans lequel les DCI sont configurées pour informer le terminal des informations de configuration utilisées pour envoyer les données de liaison descendante par le biais de n panneaux d'antenne de la station de base, dans lequel les DCI comprennent des informations d'ordonnancement de liaison descendante correspondant à chacun des n panneaux d'antenne, les informations d'ordonnancement de liaison descendante correspondant à un i^{e} panneau d'antenne comprennent un numéro de processus de requête automatique de répétition hybride, HARQ, correspondant aux données de liaison descendante envoyées par le i^{e} panneau d'antenne, les données de liaison descendante envoyées au terminal par au moins deux panneaux d'antenne correspondent au même numéro de processus HARQ; n étant un nombre entier supérieur à 1, i étant un nombre entier positif inférieur ou égal à n, et les n panneaux d'antenne comprennent un premier panneau d'antenne et un deuxième panneau d'antenne, les DCI comprennent un premier numéro de processus HARQ correspondant aux premières données de liaison descendante et un deuxième numéro de processus HARQ correspondant aux deuxièmes données de liaison descendante,
les premières données de liaison descendante étant envoyées au terminal par le premier panneau d'antenne et les deuxièmes données de liaison descendante étant envoyées au terminal par le deuxième panneau d'antenne, les n panneaux d'antenne étant associés respectivement à n points d'émission et de réception, TRP; et
l'envoi (202) par la station de base des données de la liaison descendante au terminal par le biais des n panneaux d'antenne.

2. Procédé selon la revendication 1, dans lequel,
les données de liaison descendante envoyées par le i^{e} panneau d'antenne comprennent un bloc de transport, TB;
ou
les données de la liaison descendante envoyées par le i^{e} panneau d'antenne comprennent plusieurs TB et la pluralité de TB correspondent à un numéro de processus HARQ dans une entité HARQ.

3. Procédé de réception de données de liaison descendante, comprenant:
la réception par un terminal, des informations de commande de liaison descendante de panneau d'antenne, DCI, envoyées par une station base par le biais d'un panneau d'antenne dans un mode d'ordonnancement de liaison descendante du canal physique de commande de liaison descendante unique, dans lequel les DCI sont configurées pour informer le terminal des informations de configuration utilisées pour envoyer les données de liaison descendante par le biais de n panneaux d'antenne de la station de base, dans lequel les DCI comprennent des informations d'ordonnancement de liaison descendante correspondant à chacun des n panneaux d'antenne, les informations d'ordonnancement de liaison descendante correspondant à un i^{e} panneau d'antenne comprennent un numéro de processus de requête automatique de répétition hybride, HARQ, correspondant aux données de liaison descendante envoyées par le i^{e} panneau d'antenne, les données de liaison descendante envoyées au terminal par au moins deux panneaux d'antenne correspondent au même numéro de processus HARQ; n étant un nombre entier supérieur à 1, i étant un nombre entier positif inférieur ou égal à n, et les n panneaux d'antenne comprennent un premier panneau d'antenne et un deuxième panneau d'antenne, les DCI comprennent un premier numéro de processus de requête automatique de répétition hybride, HARQ correspondant aux premières données de liaison descendante et un deuxième numéro de processus HARQ correspondant aux deuxièmes données de liaison descendante, les premières données de liaison descendante étant envoyées au terminal par le premier panneau d'antenne et les deuxièmes données de liaison descendante étant envoyées au terminal par le deuxième panneau d'antenne, les n panneaux d'antenne étant associés respectivement à n points d'émission et de réception, TRP; et
la réception (203) par le terminal des données de liaison descendante envoyées par la station de base par le biais des n panneaux d'antenne.

4. Appareil (300) destiné à envoyer les données de liaison descendante, applicable dans une station de base, comprenant:
un module d'envoi d'informations (310), configuré pour envoyer par le biais d'un panneau d'antenne les informations de commande de liaison descendante de panneau d'antenne, DCI, à un terminal dans un mode d'ordonnancement de liaison descendante du canal physique de commande de liaison descendante unique, dans lequel les DCI sont configurées pour informer le terminal des informations de configuration utilisées pour envoyer les données de liaison descendante par le biais de n panneaux d'antenne de la station de base, dans lequel les DCI comprennent des informations d'ordonnancement de liaison descendante correspondant à chacun des n panneaux d'antenne, les informations d'ordonnancement de liaison descendante correspondant à un i^{e} panneau d'antenne comprennent un numéro de processus de requête automatique de répétition hybride, HARQ, correspondant aux données de liaison descendante envoyées par le i^{e} panneau d'antenne, les données de liaison descendante envoyées au terminal par au moins deux panneaux d'antenne correspondent au même numéro de processus HARQ; n étant un nombre entier supérieur à 1, i étant un nombre entier positif inférieur ou égal à n, et les n panneaux d'antenne comprennent un premier panneau d'antenne et un deuxième panneau d'antenne, les DCI comprennent un premier numéro de processus de requête automatique de répétition hybride HARQ correspondant aux premières données de liaison descendante et un deuxième numéro de processus HARQ correspondant aux deuxièmes données de liaison descendante, les premières données de liaison descendante étant envoyées au terminal par le premier panneau d'antenne et les deuxièmes données de liaison descendante étant envoyées au terminal par le deuxième panneau d'antenne, les n panneaux d'antenne étant associés respectivement à n points d'émission et de réception, TRP; et
un module d'envoi de données (320), configuré pour envoyer les données de liaison descendante par le biais des n panneaux d'antenne.

5. Appareil (400) destiné à recevoir les données de liaison descendante, applicable dans un terminal, comprenant:
un module de réception d'information (410), configuré pour recevoir les informations de commande de liaison descendante de panneau d'antenne, DCI, envoyées par une station de base par le biais d'un panneau d'antenne dans un mode d'ordonnancement de liaison descendante du canal physique de commande de liaison descendante unique, dans lequel les DCI sont configurées pour informer le terminal des informations de configuration utilisées pour envoyer les données de liaison descendante par le biais de n panneaux d'antenne de la station de base, dans lequel les DCI comprennent des informations d'ordonnancement de liaison descendante correspondant à chacun des n panneaux d'antenne, les informations d'ordonnancement de liaison descendante correspondant à un i^{e} panneau d'antenne comprennent un numéro de processus de requête automatique de répétition hybride ,HARQ, correspondant aux données de liaison descendante envoyées par le i^{e} panneau d'antenne, les données de liaison descendante envoyées au terminal par au moins deux panneaux d'antenne correspondent au même numéro de processus HARQ; n étant un nombre entier supérieur à 1, i étant un nombre entier positif inférieur ou égal à n, et les n panneaux d'antenne comprennent un premier panneau d'antenne et un deuxième panneau d'antenne, les DCI comprennent un premier numéro de processus de requête de répétition hybride HARQ correspondant aux premières données de liaison descendante et un deuxième numéro de processus de requête de répétition hybride HARQ correspondant aux deuxièmes données de liaison descendante, les premières données de liaison descendante étant envoyées au terminal par le premier panneau d'antenne et les deuxièmes données de liaison descendante étant envoyées au terminal par le deuxième panneau d'antenne, les n panneaux d'antenne étant associés respectivement à n points d'émission et de réception, TRP; et
un module de réception de données (420), configuré pour recevoir les données de liaison descendante envoyées par la station de base par le biais des n panneaux d'antenne.

6. Support d'enregistrement non transitoire lisible par ordinateur, sur lequel sont stockés des programmes informatiques, dans lequel lorsque les programmes informatiques sont exécutés par un processeur, sont mises en œuvre des étapes du procédé consistant à envoyer les données de liaison descendante selon l'une quelconque des revendications 1 à 2 ou des étapes du procédé consistant à recevoir les données de liaison descendante selon la revendication 3.
